# EUROPEAN PATENT SPECIFICATION

(11) **EP 2 882 694 B1**
(45) Date of publication and mention of the grant of the patent: **01.05.2019**
(21) Application number: 12775319.2
(22) Date of filing: 07.08.2012
(51) Int. Cl.: C04B 2/12, F27B 1/02

(54) **INNOVATIVE METHOD OF CALCINATION IN TWIN SHAFT REGENERATIVE KILN**
INNOVATIVES KALZINIERUNGSVERFAHREN IN EINEM REGENERATIVEN DOPPELSCHACHTOFEN
PROCÉDÉ INNOVANT DE CALCINATION DANS UN FOUR DE RÉGÉNÉRATION À ARBRE DOUBLE

(43) Date of publication of application: 17.06.2015
(73) Proprietor: Qualical International Srl, 20123 Milano (IT)
(72) Inventor: CELLA, Carlo, I-24121 Bergamo (BG) (IT)
(74) Representative: Bruni, Giovanni
(86) International application number: PCT/IT2012/000246
(87) International publication number: WO 2014/024213

(56) References cited:
- WO-A2-00/51946
- DE-A1- 2 657 239
- DE-A1- 4 335 030
- DE-A1- 19 548 155
- DE-B1- 2 826 167
- GB-A- 870 649
- GUNDLACH H ET AL: "Modern lime shaft kilns and their firing with solid fuels", ZEMENT-KALK-GIPS,, vol. 39, no. 5, 1 May 1986 (1986-05-01), pages 225-234, XP001264816,

## Description

The invention relates to an innovative method of calcination in twin shaft regenerative kiln which is carried out through a series of combustion cycles, alternated between the one and the other shaft.

As yet known, the raw material for the production of lime is limestone, a sedimentary rock rich in calcium carbonate (CaCO₃), which is extracted from suitable quarries. Also marble and other minerals can be used. The material, roughly crumbled with fragment diameter in the range of centimeters to a pair of decimeters, is subjected to a calcination process, i.e. it is introduced in suitable furnaces or limekilns where it is heated gradually to 800-1000°C and then it is extracted from the bottom of the limekiln after about 10 hours. In this step, a chemical reaction known as calcination reaction occurs, from which carbon dioxide is released and calcium oxide or burnt lime is produced; CaCO₃ → CaO + CO₂. After baking: the limestone fragments weight is reduced of about 40% due to the lost carbon and oxygen atoms, and the fragments take a porous consistency. In addition, the common grey colour of the limestone is lost and the stones become mostly white. They constitute the burnt lime, which commercialized as it is or in powder, has to be stocked in perfectly hermetic containers, since it is very hygroscopic.

Generally, the known processes of calcination are carried out by systems made up of a number of devices, see for example H. Gundlach et al. Zement-Kalk-Gips, 39(5) 225-234. The same processes of lime production used in said systems are very complex and problematic and can be improved in efficiency terms.

The reduction of transition/inversion dead times is one of the possible improvement aspects in terms of efficiency, and it leads and relates, in turn, to indirect improvements in many steps of the calcination process in twin shaft regenerative kiln.

In the twin shaft regenerative kilns where the lime is baked, the time interval between a combustion cycle and the other one is called inversion time TI, in which the furnace releases the pressure contained therein, thus reaching the conditions of atmospheric pressure. Said step is known as "stress relieving process". In the twin shaft regenerative kilns, the traditional stress relieving processes are carried out by opening suitable releasing and by-pass valves which discharge the furnace pressure in the environment (releasing action) and deviate the previously blown in air in the atmosphere (by-pass action). In such conditions, the blowers provided with frequency converters continue working during the whole working cycle and therefore also during the stress relieving process: this leads to very long times needed to complete such process.

The need to maintain the blowers on is due to the technical impossibility to allow frequent stops and new firings thereof. More recently, thanks to the introduction of cheaper inverters or speed change gears, it has been possible to think to frequent blower stops.

Therefore, it exists the need for a new method which allows to solve the above cited problem and to define an optimized process for the lime production which reduces remarkably the times/cycle, in particular the time TI of the stress relieving process.

The process, object of the present invention, occurs cyclically according to the following steps which are alternated between one shaft and the other one:
- fuel injection and combustion;
- washing cycle starting;
- stop of the blowers provided with frequency converters;
- washing cycle end;
- lime discharging and path exchange of air and smoke;
- limestone loading;
- firing of the blowers provided with frequency converters;
- after the new firing of the blowers provided with frequency converters a new combustion cycle begins again in the shaft not interested by the previous one.

Using said process it is possible to achieve many advantages both in technological and economic terms.

A first advantage is provided by the inversion time reduction (60-20=40 sec@400tpd). Thanks to the stopping of all the blowers provided with frequency converters during the inversion time, the furnace pressure is released through a filter and it is no longer needed to move or open the releasing and by-pass valves. This allows a gain in terms of inversion times, which reaches about 20 seconds, thus allowing to save 30-40% in terms of cycle times.

As a consequence, thanks to the time saving obtained leaving the releasing and by-pass valves still or closed, it is possible to gain 3-5% in terms of daily production.

According to another aspect of the invention, thanks to the frequency converters installed on all the interested blowers, it is possible to adjust promptly the same to provide the exact quantity of combustion and cooling air needed for the process at any level of production (from 30 to 110%). The working system adjusts automatically the speed of each blower so that it is defined and reached the exact quantity of air calculated for each set of production and the respective quantity of air excess.

Moreover, another advantage is the absence of noise coming from the releasing and stress relieving valves caused by the fast release in the atmosphere of the pressured air contained in the furnace. In fact, with the new process, the air is now released slowly and gradually through the filter without using the above cited valves.

In addition, since the releasing and by-pass valves are kept closed it is allowed no powder release.

Finally, a last advantage is a lower consumption of electric energy, obtained by stopping the blowers provided with frequency converters during the inversion. It is calculated a saving about 35000 Euro/per year considering an electric energy cost of 0,1 Euro/Kwh producing 400 tons a day of lime for 300 days/per year.

These and other advantages will be described referring to the appended drawings, in which:
Figure 1 shows a block diagram of the process object of the present invention;

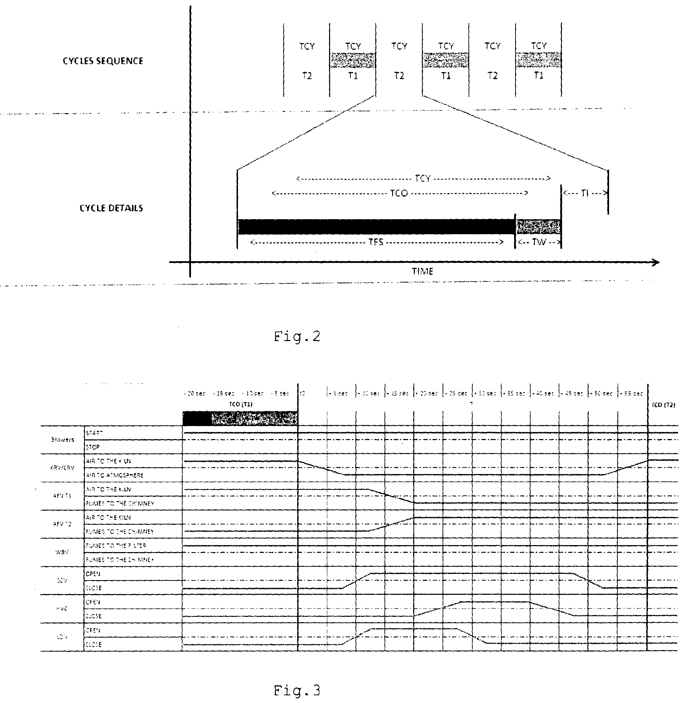

Figure 2 shows a graph relative to the time sequence relative to the system working cycles;
Figure 3 shows a time diagram relative to the inversion sequence in a system working cycle.

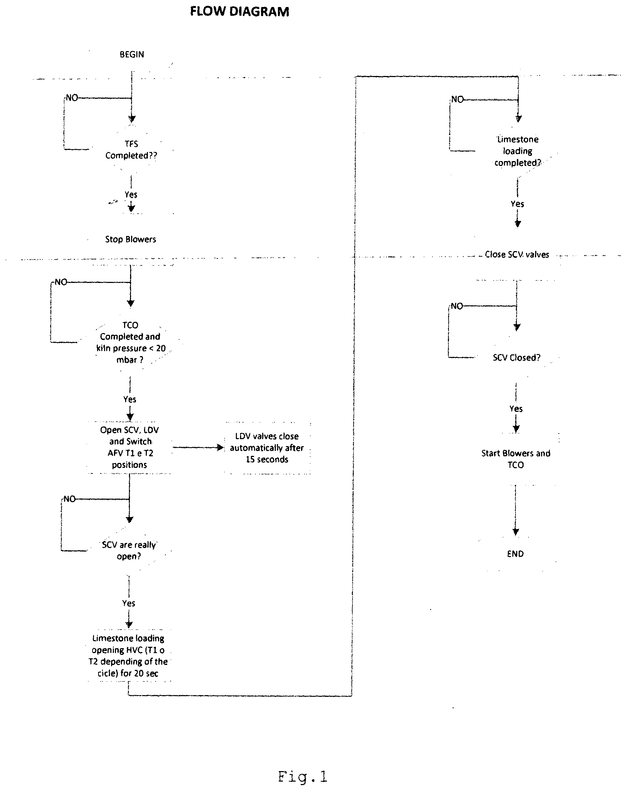

As yet stated, this new method of lime production is carried out through a series of combustion cycles in a twin shaft regenerative kiln according to the block diagram shown in figure 1. The process carried out in a suitable twin shaft regenerative calcination kiln comprises cyclically a step of fuel injection and combustion, a step of combustion nozzles washing and a step of lime discharge and limestone load. At the end of this cycle, a new step of combustion in the other shaft begins. The important innovation of the present method is in that by stopping the blowers provided with frequency converters during the washing, discharge and load steps, the releasing and by-pass valves are kept closed thus reducing the inversion times of the furnace. Said releasing and by-pass valves are therefore no longer on, their intervention being limited to emergency conditions.

The time called of "inversion" is the time interval between a combustion cycle and the other one and it begins yet at the end of the first combustion cycle when the blowers provided with frequency converters are immediately stopped and the furnace begins to release the pressure contained therein through a filter. Said furnace releases pressure up to reach a value lower than 20mbar therein and sends a signal to the general management operative system of the system which moves the process valves, except the releasing and by-pass valves. Then, the inversion of all the positions of all the valves occurs and the blowers provided with frequency converters are re-actuated for starting the new combustion cycle.

More in particular, the blowers provided with frequency converters are stopped (2) when the fuel injection time TFS, corresponding to the effective fuel supplying time, is completed (1). The operative system adjusts the fuel so that the TFS is near to the combustion time TCO the most, after the washing time TW needed. The TCO corresponds to the period when the furnace is in pressure and so is able to provide combustion and the TW is the time needed for the combustion nozzles washing, by means of air or nitrogen, before the furnace depressurizing.

The combustion step is completed by bringing the inner pressure of the furnace again to a pressure lower than 2mbar (3), due only to the gas releasing effect from the furnace filter, without moving the suitable stress relieving valves.

At the end of the combustion step (4) the shaft closing valves SCV are opened and they guarantee the pneumatic sealing of the furnace in the limestone load area and the lime discharge valves LDV are opened to allow the discharge of the lime produced and they guarantee the pneumatic sealing of the furnace in the lime discharge area. In the following, the lime discharge valves are closed again 5. At the same time, the air-smoke exchange valves AFV are inverted so that the other shaft is supplied. Once the valves SCV are opened (6), the limestone load valves HCV (7) are opened, which alternatively supply the limestone in a shaft or the other one according to the production cycle. In the following, the limestone load valves are closed again. Once the limestone load is completed (8), the shaft closing valves SCV are closed again (9). The closing confirm of the SCV (10) makes the blowers provided with frequency converters (11) start again and a new cycle of combustion is started in the other shaft.

## Claims

1. Method for the production of lime carried out in a suitable twin shaft regenerative calcination furnace, said furnace comprising one or more blowers, all provided with frequency converters, and a plurality of process valves among which at least one releasing valve and at least one by-pass valve, said method, cyclically and alternately between the two shafts, comprising a step of fuel injection and combustion, a step of combustion nozzles washing and a step of lime discharge and limestone load, **characterized in that** during the steps of combustion nozzle washing, lime discharge and limestone load, said releasing and by-pass valves are kept closed and said blowers are stopped with consequent reduction of the furnace inversion time.

2. Method according to claim 1, wherein one or more blowers are stopped when the fuel injection time is completed.

3. Method according to claim 1, wherein when the furnace inner pressure reaches a pressure lower than 20mbar the shaft closing valves and the lime discharge valves are opened.

4. Method according to claim 3, wherein said lime discharge valves are closed in the following.

5. Method according to claim 3 or 4, wherein opening said shaft closing valves allows the limestone load valves opening.

6. Method according to claim 5, wherein said limestone load valves are closed again after the load step.

7. Method according to any one of claim 3 to 6, wherein at the end of said limestone load step the shaft closing valves are closed.

8. Method according to claim 7, wherein by moving said shaft closing valves, one or more blowers and so a new combustion cycle is started again.

9. Method according to any one of the preceding claims, **characterized in that** in some of its steps, the stress relieving or releasing valves are not used, with the consequent reduction of powders and noises.

## Patentansprüche

1. Verfahren zur Herstellung von Schnellkalk, das in einem geeigneten regenerativen Doppelwellen-Kalzinierungsofen durchgeführt wird, wobei der genannte Ofen ein oder mehrere Gebläse umfasst, die alle mit Frequenzumrichtern versehen sind, und mehrere Prozessventile, von denen mindestens ein Auslassventil und mindestens ein Bypass-Ventil vorhanden sind, wobei das genannte Verfahren zyklisch und alternativ zwischen den beiden Wellen einen Kraftstoffeinspritz- und Verbrennungsvorgand, einen Waschvorgang der Verbrennungsdüsen und einen Abgabevorgang von Kalk und einen Ladevorgang von Kalkstein, **dadurch gekennzeichnet, dass** während des Waschvorgangs der Verbrennungsdüsen, des Abgabevorgangs des Kalks und des Ladevorgangs des Kalksteins, die Auslass- und Bypass-Ventile geschlossen gehalten werden und die genannten Gebläse geschlossen behalten werde und die genannten Gebläse angehalten werden, mit einer konsequenten Reduzierung der Umkehrzeit des Ofens.

2. Verfahren nach Anspruch 1, wobei ein oder mehrere Gebläse angehalten werden, wenn die Kraftstoffeinspritzzeit abgelaufen ist.

3. Verfahren nach Anspruch 1, wobei wenn der Innendruck des Ofens einen Druckwert von weniger als 20 mbar erreicht, werden die Schließventile der Wellen und die Ventile zum Entleeren des Kalksteins geöffnet.

4. Verfahren nach Anspruch 3, wobei die genannten Ventile zum Ablassen des Kalksteins anschließend geschlossen werden.

5. Verfahren nach Anspruch 3 oder 4, wobei die Öffnung der genannten Schließventile der Wellen ermöglicht die Öffnung der Ventile zum Laden von Kalkstein.

6. Verfahren nach Anspruch 5, wobei die genannten Ventile zum Laden von Kalkstein nach dem Ladevorgang wieder geschlossen werden.

7. Verfahren nach einem der Ansprüche 3 bis 6, wobei am Ende des genannten Ladevorgangs von Kalkstein die Schließventile der Wellen geschlossen werden.

8. Verfahren nach Anspruch 7, wobei durch Bewegen der genannten Schließventile der Wellen, ein oder mehrere Gebläse aktiviert werden und dann ein Verbrennungszyklus erneut gestartet wird.

9. Verfahren nach einem der vorhergehenden Ansprüche, **dadurch gekennzeichnet, dass** in einigen seiner Vorgänge werden die Spannungsentlastungs-und Ablassventile nicht verwendet, mit der daraus folgenden Verringerung von Staub und Lärm.

## Revendications

1. Procédé de production de chaux vive produite dans un four de calcination régénérative à double arbre approprié, ledit four comprenant une ou plusieurs soufflantes, tous équipés de convertisseurs de fréquence, et une pluralité de vannes de traitement parmi lesquelles sont présentes au moins une vanne de décharge et au moins une vanne de dérivation, ledit procédé comprenant, de manière cyclique et alternative entre les deux arbres, une opération d'injection de carburant et de combustion, une opération de lavage des buses de combustion et une opération de décharge de chaux vive et de charge de calcaire, **caractérisé en ce que** lors des opérations de lavage des buses de combustion, de décharge de la chaux vive et de la charge de calcaire, lesdites vannes d'échappement et de dérivation sont maintenues fermées et que lesdites soufflantes sont arrêtées avec une réduction conséquente du temps d'inversion du four.

2. Procédé selon la revendication 1, dans lequel une ou plusieurs soufflantes sont arrêtées lorsque le temps d'injection de carburant s'est écoulé.

3. Procédé selon la revendication 1, dans lequel, lorsque la pression interne du four atteint une valeur de pression inférieure à 20 mbar, les vannes de fermeture d'arbre et les vannes de décharge de la chaux vive sont ouvertes.

4. Procédé selon la revendication 3, dans lequel lesdites vannes de décharge de la chaux vive sont ensuite fermées.

5. Procédé selon la revendication 3 ou 4, dans lequel l'ouverture desdites vannes de fermeture des arbres permet l'ouverture des vannes de chargement de calcaire.

6. Procédé selon la revendication 5, dans lequel lesdites vannes de chargement de calcaire sont refermées après l'opération de chargement.

7. Procédé selon l'une quelconque des revendications 3 à 6, dans lequel, à la fin de ladite opération de chargement de calcaire, les vannes de fermeture d'arbre sont fermées.

8. Procédé selon la revendication 7, dans lequel, en déplaçant lesdites vannes de fermeture d'arbre, un ou plusieurs ventilateurs sont activés, et ensuite un nouveau cycle de combustion est démarré.

9. Procédé selon l'une quelconque des précédentes revendications, **caractérisé en ce que** dans certaines de ses opérations, les vannes de distension des contraintes ou les vannes de décharge ne sont pas utilisés, avec la réduction conséquente de la poussière et du bruit.
